# EUROPÄISCHE PATENTSCHRIFT

(11) **EP 1 478 300 B1**
(45) Veröffentlichungstag und Bekanntmachung des Hinweises auf die Patenterteilung: **17.05.2006**
(21) Anmeldenummer: 03704690.1
(22) Anmeldetag: 25.02.2003
(51) Int. Cl.: A61C 5/12

(54) **KOFFERDAM-ABDECKMITTEL UND STREIFEN-BEFESTIGUNGSMITTEL FÜR DIESEN**
COFFERDAM COVERING MEANS AND STRIP-SHAPED FASTENING MEANS FOR THE SAME
DISPOSITIF DE COUVERTURE DE TYPE DIGUE ET DISPOSITIF DE FIXATION EN FORME DE BANDE

(30) Priorität: 28.02.2002 DE 10208639
(43) Veröffentlichungstag der Anmeldung: 24.11.2004
(73) Patentinhaber: Coltène/Whaledent GmbH + Co. KG, 89129 Langenau (DE)
(72) Erfinder: MANNSCHEDEL, Werner, 89129 Langenau (DE); MÜLLER, Barbara, 89129 Langenau (DE)
(74) Vertreter: Forstmeyer, Dietmar
(86) Internationale Anmeldenummer: PCT/EP2003/001924
(87) Internationale Veröffentlichungsnummer: WO 2003/071977

(56) Entgegenhaltungen:
- US-A- 5 011 409
- US-A- 5 499 917
- US-A- 5 803 734

## Beschreibung

Die Erfindung betrifft ein Kofferdam-Abdeckmittel sowie ein Streifen-Befestigungsmittel für diesen aus einem flexiblen, elastischen Material. Ferner betrifft die Erfindung einen Kofferdam mit einem derartigen Kofferdam-Abdeckmittel und/oder Streifen-Befestigungsmittel.

Eine Kofferdam ist in der Zahlheilkunde als Hilfsmittel zum Isolieren und Trockenlegen von zu behandelnden Zähnen seit langem bekannt. Als Abdeckmittel wird eine Gummi-(Kautschuk) bzw. Latexfolie verwendet, in der ein Loch ausgebildet und derart in der Mundhöhle angeordnet ist, daß sie die Mundschleimhaut überdeckt, während der obere Teil eines zu behandelnden Zahnes frei zugänglich ist. Zum Befestigen der Folie in der Mundhöhle wird in der Regel eine Kofferdamklammer oder ein Streifen-Befestigungsmittel verwendet, die bwz. das über den zu behandelnden zahn aufgeklemmt oder zwischen zwei Zähnen eingeklemmt wird.

Das Abdeckmittel und das Befestigungsmittel müssen eng definierte Anforderungen hinsichtlich ihrer Elastizität, ihrer Dehnbarkeit und ihrer Reißfestigkeit erfüllen. Zugleich muß das Abdeckmittel ausreichend an die Kontur der Mundhöhle anzupassen sein, ohne das sich störende Aufwölbungen und Falten bilden.

US-A-5 499 917 beschreibt ein elastisches Kofferdam-Abdeckmittel.

Der Erfindung liegt die Aufgabe zugrunde, ein Kofferdam-Abdeckmittel sowie ein Streifen-Befestigungsmittel mit den oben genannten Eigenschaften bereitzustellen. Dabei sollen sich insbesondere zwischen diesen Eigenschaften vorteilhafte Wechselwirkungen ergeben.

Diese Aufgabe ist erfindungsgemäß mit einem eingangs genannten folienartigen Kofferdam-Abdeckmittel sowie mit einem Streifen-Befestigungsmittel gelöst, bei dem das Material ein elastisches Thermoplast ist, das Kofferdam-Abdeckmittel oder Streifen-Befestigungsmittel eine der Mundschleimhaut zuzuwendende Unterseite (12) sowie eine davon abgewandte Oberseite aufweist, und zumindest eine Seite (12) mit einer strukturierten Oberfläche (14) gestaltet ist, wobei die Oberflächenstruktur (14) eine Vielzahl Vertiefungen (16) aufweist, welche sich ausgehend von Oberflächenebene (18) einer Seite (12) in Richtung der abgewandten Seite erstrecken, und die Vertiefungen (16) je in der Oberflächenebene (18) eine Größenausdehnung von 0,10 mm bis 0,50 mm, insbesondere von 0,20 bis 0,40 mm, und einen Abstand von 0,05 mm bis 0,30 mm, insbesondere von 0,10 mm bis 0,25 mm, aufweisen. Die Aufgabe ist ferner mit einem Kofferdam gelöst, bei dem ein derartiges Kofferdam-Abdeckmittel und/oder ein Streifen-Befestigungsmittel verwendet wird.

Das Verwenden eines elastischen Thermoplastes als Material für einen Kofferdam steht im Gegensatz zu bisherigen Verwendung von Gummi (Kautschuk) bzw. Latex als Material. Während Latex zur Herstellung von Elastomeren verwendet wird, werden Thermoplaste-Formteile durch Aufschmelzen und nachfolgendes Erstarren hergestellt. Thermoplaste weisen dabei im Vergleich zu Elastomeren grundsätzlich insbesondere eine erheblich geringere Elastizität auf, d.h. sie haben nicht die Fähigkeit, großeFormänderungen mitzumachen und nach der Entlastung sofort wieder in den Ausgangszustand zurückzukehren. Sie erscheinen daher zunächst nicht als geeignetes Material für ein Kofferdam-Abdeckmittel und/oder ein Streifen-Befestigungsmittel.

Erfindungsgemäß wird für das Abdeckmittel sowie zugleich oder alternativ für das Befestigungsmittel ein Thermoplast verwendet, dem durch entsprechende Aufschmelzungs- und Erstarrungsprozesse und gegebenenfalls zur Zugabe entsprechender Füllstoffe und/oder Weichmacher elastische Eigenschaften verliehen worden sind.

Durch das Verwenden eines elastischen Thermoplasts ergibt sich der überraschende Vorteil, daß das Abdeckmittel ein erheblich geringeres Bestreben zum Einreißen an einer "Fehlstelle" aufweist. Solche Fehlstellen sind z.B. Löcher, wie sie bei einem Kofferdam-Abdeckmittel für einen zu behandelnden Zahn ausgebildet werden. Da das erfindungsgemäße Abdeckmittel sowie das erfindungsgemäße Befestigungsmittel nahezu nicht von alleine einreißt können die erforderlichen Löcher präziser und dauerhafter ausgebildet werden und das Streifen-Befestigungsmittel kann zum Anbringen zwischen zwei Zähnen einer stärkeren Dehnung ausgesetzt werden, als es bei herkömmlichen Befestigungsmitteln der Fall ist. Beim Dehnen verringert sich der Querschnitt des erfindungsmäßigen Befestigungsmittels insbesondere in seiner Mitte, wobei das Befestigungsmittel wegen seines stark verringerten Querschnitts besonders leicht zwischen zwei Zähnen eingefügt werden kann.

Das erfindungsgemäße Material weist zugleich eine sehr gute Dehnbarkeit sowie eine sehr hohe Elastizität und Flexibilität auf, d.h. es kann an die Kontur einer Mundhöhle gut faltenfrei angepaßt werden. Bei Verwendung in Form eines Streifen-Befestigungsmittels'drängt das Material besonders vorteilhaft in seine Ausgangslage zurück, wobei es zwischen zwei Zähnen einen festen Halt ausbildet.

Bei einer vorteilhaften Weiterbildung der Erfindung wird ein elastisches Thermoplast verwendet, daß bei einer Dehnung in einer Längsrichtung eine nahezu lineare Kraft-Weg-Kennlinie aufweist. Ein Material mit einem derartigen Verhalten ermöglicht eine besonders benutzerfreundliche Handhabung. Bei Verwendung als Streifen-Befestigungmittel kann dieses vom behandelnden Arzt bzw. Benutzer gezielt gelängt werden, und so die Gefahr einer unsachgemäßen Handhabung und eines Zerreissens sehr gering gehalten werden. Beim Anpassen von Löchern eines Kofferdam-Abdeckmittels für zu behandelnde Zähne kann der behandelnde Arzt bzw. Benutzer durch die Größe eines Loches den Anpreßdruck eines Abdeckmittels an den Rändern des Zahnes bestimmen. Aufgrund des linearen Kraft-Wegverlaufes beim Dehnen des erfindungsgemäß weitergebildeten Materials ist die Korrelation zwischen der Größe des Loches und dem erzielten Anpreßdruck linear. Für einen Benutzer ist dieses lineare Verhalten leicht nachvollziehbar. Vergrößert er das Loch, so verringert sich entsprechend der Anpreßdruck. Dieses Verhalten ist nahezu unabhängig von der absoluten Größe des Loches.

Ein Kofferdam-Abdeckmittel weist eine der Mundschleimhaut zuzuwendende Unterseite sowie eine davon abgewandte Oberseite auf. Erfindungsgemäß verwendete elastische Plastomere sind Materialbedingt an der Oberfläche klebrig. Dies ist zunächst ein Vorteil, denn das Kleben verbessert die Haftung des Abdeckmittels oder Befestigungsmittels an einem Zahn. Beim Einlegen des Abdeckmittels oder Befestigungsmittels könnte es unter Umständen jedoch vorkommen, daß Oberflächen aneinander anliegen und verkleben, oder daß sich ein Abdeckmittel nicht über einen Zahn ziehen läßt und ein Befestigungsmittel nicht zwischen zwei Zähnen einschieben läßt. Damit würde sich gegebenenfalls die Handhabbarkeit des erfindungsgemäßen Abdeckmittels oder Befestigungsmittels verschlechtern. Bei einer erfindungsgemäßen Weiterbildung ist hingegen eine Seite, die Unter- und/oder die Oberseite mit einer saugfähigen Oberfläche versehen, die insbesondere als Beflockung mit saugfähigen Fasern oder als aufgebrachter Vlies gestaltet ist.

Bei dem erfindungsgemäßen Kofferdam-Abdeckmittel oder Streifen-Befestigungsmittel ist eine Seite, die Unter- und/oder die Oberseite mit einer strukturierten Oberfläche gestaltet. Unter den Begriffen "strukturierte Oberfläche" bzw. "Oberflächenstruktur" soll in diesem Zusammenhang eine Oberfläche verstanden werden, die nicht glatt ist, sondern die gezielt mit Erhebung und/oder Vertiefung versehen ist. Die erfindungsgemäß vorgesehene strukturierte Oberfläche führt dazu, daß insgesamt die Kontaktfläche verringert wird. Damit verringert sich auch die klebend wirkende Fläche des Abdeckmittels oder Befestigungsmittels. Zugleich kann auf ein Gleitmittel verzichtet werden.

Erfindungsgemäß weist die Oberflächenstruktur eine Vielzahl von Vertiefungen auf, welche sich ausgehend von der Oberflächenebene der entsprechenden Seite in Richtung der abgewandten Seite erstrecken. Bei dieser Art Oberfläche bleibt die Oberflächenebene im wesentlichen als Kontaktfläche erhalten, so daß sich eine verhältnismäßig hohe Adhäsionswirkung an der entsprechenden Seite ergibt.

Erfindungsgemäße Maße für die Vertiefungen des Abdeckmittels oder Befestigungsmittels sind in der Oberflächenebene eine Größenausdehnung von 0,10 mm bis 0,50 mm, insbesondere von 0,20 bis 0,40 mm, sowie ein Abstand von 0,05 mm bis 0,30 mm, insbesondere von 0,10 mm bis 0,25 mm. Um einen ausreichenden Abstand von der Kontaktfläche zu schaffen und zugleich die Reißfestigkeit des Abdeckmittels oder Befestigungsmittels nicht zu verringern, weisen die Vertiefungen je von der Oberflächenebene aus eine Tiefe von -0,05 mm bis 0,30 mm, insbesondere von 0,10 bis 0,20 mm auf.

Besonders vorteilhaft sind die Vertiefungen punktförmig bzw. wabenförmig gestaltet. Ein derart ausgebildetes Abdeckmittel oder Befestigungsmittel hat ähnliche Eigenschaften wie ein Gewebe, d.h. daß es bei hoher Flexibilität und geringer Neigung zum Aufwölben und Faltenbilden eine hohen Reißfestigkeit aufweist. Dies wird durch die zwischen den Waben verbleibenden "Stege" eines derart gestalteten Abdeckmittels erreicht. Die genannten Stege erstrecken sich vorteilhaft rechtwinklig zueinander, indem die Vertiefungen je in der Oberflächenebene einen rechteckigen, insbesondere quadratischen Querschnitt aufweisen. Ein derart gestaltetes Abdeckmittel hat ein in alle Richtungen der Oberflächenebene verhältnismäßig gleichmäßig ausgeprägtes Dehnverhalten.

Alternativ können die Vertiefungen je in der Oberflächenebene einen sechseckigen, insbesondere gleichseitig sechseckigen Querschnitt aufweisen. Ferner können die Vertiefungen rillenförmig gestaltet sein. Mit Hilfe solcher Rillen kann insbesondere auch ein Wölben und Abknicken des Abdeckmittels oder Befestigungsmittels gezielt in bestimmten Bereichen und/oder in bestimmte Richtungen erleichtert werden.

Ein derartiges gezieltes "Schwächen" des Abdeckmittels oder Befestigungsmittels an bestimmten Stellen oder in bestimmten Bereichen kann auch unabhängig von dem im Kennzeichen des Anspruchs 1 genannten Thermoplasts als Material für das Kofferdam-Abdeckmittel verwendet werden, z.B. um ein Abdeckmittel zu schaffen, daß sich besonders leicht und dauerhaft an die Kontur der Mundhöhle anpassen läßt. Um besonders leicht zu dehnende, zu wölbende oder zu knickende Stellen oder Bereiche im Abdeckmittel zu schaffen können sowohl punktförmige als auch linienförmige Vertiefungen einzeln oder in größerer Anzahl unmittelbar nebeneinander oder weiter voneinander beabstandet vorgesehen sein.

Die erfindungsgemäß weitergebildeten Vertiefungen lassen sich besonders kostengünstig ausbilden, indem sie schüsselförmig, insbesondere mit gerundeten Ecken ausgestaltet sind. Diese Form ist darüber hinaus hinsichtlich der erforderlichen Hygiene besonders sinnvoll.

Bei dem erfindungsgemäß weitergebildeten Abdeckmittel können sich auch die Oberflächenstrukturen der Unter- und der Oberseite unterscheiden, so daß zwei verschieden adhäsiv wirkende Oberflächen an einem einzelnen Abdeckmittel zur Auswahl stehen. Neben den oben bereits genannten Vorteilen hält die adhäsive bzw. klebrige Oberfläche auch Bohrmaterial zurück, das bei einer dentalmedizinischen Behandlung aus dem zu behandelnden Zahn gefördert wird.

Die oben genannte gewebeartige Struktur des erfindungsgemäßen folienartigen Abdeckmittels oder streifenförmigen Befestigungsmittels ist besonders ausgeprägt, wenn die Vertiefungen der Unterseite je in der Oberflächenebene gegenüberliegend von den Vertiefungen der Oberseite angeordnet sind. Alternativ können die Vertiefungen der Unterseite je in der Oberflächenebene zu den Vertiefungen der Oberseite versetzt angeordnet sein. Damit läßt sich ein Abdeckmittel oder Befestigungsmittel herstellen, daß zwar die genannten Vorteile einer verringerten Kontaktfläche aufweist, dabei aber hinsichtlich Dehnverhalten und Reißfestigkeit im wesentlichen das Verhalten einer gewöhnlichen beidseitig glatten Folie aus elastischem Plastomer zeigt.

Zusätzlich oder alternativ zu den oben beschriebenen Oberflächen kann das erfindungsgemäße Kofferdam-Abdeckmittel und/oder Streifen-Befestigungsmittel aus einem geschichteten Material hergestellt sein, dessen Schichten unterschiedliche Materialien aufweisen. Vorteilhaft ist insbesondere eine Schicht aus elastischem Thermoplast, die mit einer Schicht aus Silikon/SEBS/Teflon kombiniert ist. Ein derartiges Abdeckmittel- und/oder Befestigungsmittel-Material weist eine besonders hohe Dehnfähigkeit ohne eine Gefahr des Reißens auf. Ferner ist es chemisch resistent, kann leicht desinfiziert werden und besitzt keinen unangenehmen Geschmack.

### Kurzbeschreibung der Zeichnungen

Nachfolgend wird ein Ausführungsbeispiel eines erfindungsgemäßen Kofferdam-Abdeckmittels anhand der beigefügten schematischen Zeichnungen näher erläutert. Es zeigt:
Figur 1 eine perspektivische Ansicht eines erfindungsgemäßen Kofferdam-Abdeckmittels, und
Figur 2 die Einzelheit 1 in Figur 1

### Detaillierte Beschreibung des Ausführungsbeispiels

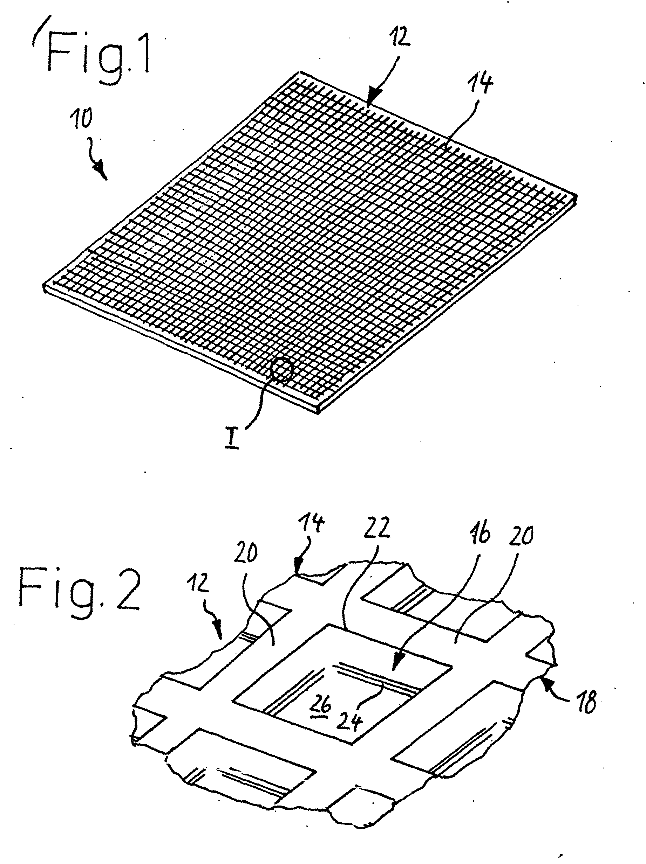

In Figur 1 ist ein Abdeckmittel 10 eines weiter nicht dargestellten Kofferdams für dentalchirurgische Eingriffe dargestellt. Das Abdeckmittel 10 umfaßt im wesentlichen eine ca. 0,3 mm dicke Folie, die etwa quadratische Form mit einer Kantenlänge von 140 bis etwa 150 mm aufweist.

In das Abdeckmittel 10 kann ein Loch eingeschnitten und das Abdeckmittel 10 während des Eingriffs über einen zu behandelnden Zahn geschoben werden.

Das Abdeckmittel 10'ist aus einem elastischen Thermoplast hergestellt, wodurch es hervorragende Eigenschaften hinsichtlich Reißfestigkeit und Dehnverhalten aufweist.

Das Abdeckmittel 10 weist eine Unterseite 12 auf, die bei einem Eingriff auf die den zu behandelnden Zahn umgebende Mundschleimhaut und die benachbarten Zähne aufgelegt wird.

In Figur 2 ist veranschaulicht, daß das Abdeckmittel 10 an der Unterseite 12 keine glatte sondern eine strukturierte Oberfläche 14 aufweist. Diese ist mit einer Vielzahl schüsselförmiger Vertiefung 16 gebildet, die sich von einer Oberflächenebene 18 der Unterseite in Richtung einer von der Unterseite 12 abgewandten und weiter nicht dargestellten Oberseite des Abdeckmittels 10 erstrecken. Auf diese Weise wird verhindert, daß die grundsätzlich klebrigen Oberflächen der Folie aus elastischem Thermoplast zu stark aneinander kleben.

Die schüsselförmigen Vertiefungen 16 weisen in der Oberflächenebene quadratische Formen mit einer Größenausdehnung von ca. 0,3 mm mal 0,3 mm auf. Diese Quadrate liegen nebeneinander angeordnet in einem Raster mit einem Abstand von etwa 0,1 mm. Dabei befinden sich obere Kanten 22 der Quadrate bzw. Vertiefungen 16 derart nebeneinander, daß in dem Raster durchgehende und sich rechtwinklig kreuzende Stege 20 gebildet sind.

Die Vertiefungen 16 weisen zwischen den Stegen 20 eine Tiefe von ca. 0,1 mm auf. Untere Ecken 24 der Vertiefungen 16 sind abgerundet. Dazwischen befinden sich Bodenflächen 26 der Vertiefungen 16, die beim Einlegen des Abdeckmittels in die Mundhöhle zwar von einer weiteren Oberfläche des Abdeckmittels beabstandet bleiben, die beim Anpressen an einen Zahn aber an diesem anliegen.

Bei einem nicht dargestellten Abdeckmittels eines erfindungsgemäßen Kofferdams ist das thermoplastische Material mit einer Beflockung aus saugfähigen Fasern oder einem aufgebrachten Vlies versehen, so daß es ein Patient beim Einlegen in eine Mundhöhle als angenehm empfindet und es zugleich leicht gehandhabt werden kann.

Die beschriebenen Materialien und Oberflächen sind insbesondere auch zum Herstellen eines Streifen-Befestigungsmittels vorteilhaft, daß auch als "Flexi-Strip" bezeichnet wird und zum Einschieben zwischen zwei Zähnen verwendet wird, damit ein darunterliegendes Kofferdam-Abdeckmittel in der Mundhöhle nicht verrutschen kann.

Das Befestigungsmittel ist im Querschnitt vorteilhaft insbesondere keilförmig, keilstumpfförmig, elliptisch, kreisrund, quadratisch, rechteckig oder nahezu quadratisch oder rechteckig mit zumindest einer nach innen oder außen gewölbten Seite gestaltet.

### Bezugszeichenliste

- 10: Kofferdam-Abdeckmittel
- 12: Unterseite
- 14: strukturierte Oberfläche
- 16: Vertiefung
- 18: Oberflächenebene
- 20: Steg
- 22: obere Kante
- 24: untere Ecke
- 26: Bodenfläche

## Patentansprüche

1. Kofferdam-Abdeckmittel (10) oder Streifen-Befestigungsmittel aus einem flexiblen, elastischen Material, wobei
das Material ein bei Raumtemperatur elastisches Thermoplast ist,
das Kofferdam-Abdeckmittel oder Streifen-Befestigungsmittel eine der Mundschleimhaut zuzuwendende Unterseite (12) sowie eine davon abgewandte Oberseite aufweist, und zumindest eine Seite (12) mit einer strukturierten Oberfläche (14) gestaltet ist, wobei die Oberflächenstruktur (14) eine Vielzahl Vertiefungen (16) aufweist, welche sich ausgehend von einer Oberflächenebene (18) einer Seite (12) in Richtung der abgewandten Seite erstrecken, und
die Vertiefungen (16) je in der Oberflächenebene (18) eine Größenausdehnung von 0,10 mm bis 0,50 mm, insbesondere von 0,20 mm bis 0,40 mm, und einen Abstand von 0,05 mm bis 0,30 mm, insbesondere von 0,10 mm bis 0,25 mm aufweisen.

2. Kofferdam-Abdeckmittel oder Streifen-Befestigungsmittel nach Anspruch 1, wobei
das elastische Thermoplast bei einer Dehnung in einer Folienebene eine nahezu lineare Kraft-Weg-Kennlinie aufweist.

3. Kofferdam-Abdeckmittel oder Streifen-Befestigungsmittel nach Anspruch 1 oder 2, wobei
es mit einer saugfähigen Oberfläche, insbesondere in Gestalt einer Beflockung mit Fasern oder einem aufgebrachten Flies, gestaltet ist.

4. Kofferdam-Abdeckmittel oder Streifen-Befestigungsmittel nach Anspruch 1, 2 oder 3, wobei
die Vertiefungen (16) je von der Oberflächenebene (18) aus eine Tiefe von 0,05 mm bis 0,30 mm, insbesondere von 0,10 mm bis 0,20 mm aufweisen.

5. Kofferdam-Abdeckmittel oder Streifen-Befestigungsmittel nach Anspruch 1 bis 4, wobei
die Vertiefungen (16) punktförmig gestaltet sind.

6. Kofferdam-Abdeckmittel oder Streifen-Befestigungsmittel nach Anspruch 5, wobei
die Vertiefungen (16) je in der Oberflächenebene (18) einen rechteckigen, insbesondere quadratischen Querschnitt aufweisen.

7. Kofferdam-Abdeckmittel oder Streifen-Befestigungsmittel nach Anspruch 1 bis 6, wobei
die Vertiefungen (16) schüsselförmig, insbesondere mit gerundeten Ecken (24) ausgestaltet sind.

8. Kofferdam-Abdeckmittel oder Streifen-Befestigungsmittel nach Anspruch 1 bis 7, wobei
es aus mindestens zwei Schichten aus verschiedenen Materialien aufgebaut ist und insbesondere eine Schicht aus Silikon/SEBS/Teflon aufweist.

9. Kofferdam mit einem Kofferdam-Abdeckmittel nach einem der Ansprüche 1 bis 8.

## Claims

1. Rubber dam covering means (10) or strip securing means of a flexible, elastic material,
wherein the material is a thermoplastic material that is elastic at room temperature,
the rubber dam covering means or strip securing means has an underside (12) that is to be arranged facing the oral mucosa and an upper side remote therefrom, and at least one side (12) is provided with a structured surface (14),
the surface structure (14) having a plurality of depressions (16) which, starting from a surface plane (18) of one side (12), extend in the direction of the remote side, and
the depressions (16) each have an extent of from 0.10 mm to 0.50 mm, especially from 0.20 mm to 0.40 mm, in the surface plane (18) and a spacing of from 0.05 mm to 0.30 mm, especially from 0.10 mm to 0.25 mm.

2. Rubber dam covering means or strip securing means according to claim 1,
wherein the elastic thermoplastic material has an almost linear force-displacement characteristic curve on being stretched in a plane of a sheet.

3. Rubber dam covering means or strip securing means according to claim 1 or 2,
wherein it is provided with an absorbent surface, especially in the form of a flock coating of fibres or an applied nonwoven material.

4. Rubber dam covering means or strip securing means according to claim 1, 2 or 3,
wherein the depressions (16) each have, starting from the surface plane (18), a depth of from 0.05 mm to 0.30 mm, especially from 0.10 mm to 0.20 mm.

5. Rubber dam covering means or strip securing means according to claim 1 to 4,
wherein the depressions (16) are of point-form configuration.

6. Rubber dam covering means or strip securing means according to claim 5,
wherein the depressions (16) each have a rectangular, especially square, cross-section in the surface plane (18).

7. Rubber dam covering means or strip securing means according to claim 1 to 6,
wherein the depressions (16) are of dish-shaped structure, especially having rounded corners (24).

8. Rubber dam covering means or strip securing means according to any one of claims 1 to 7,
wherein it is composed of at least two layers of different materials and especially has a layer of silicone/SEBS/Teflon.

9. Rubber dam having a rubber dam covering means according to any one of claims 1 to 8.

## Revendications

1. Dispositif de couverture de type digue (10) ou dispositif de fixation en forme de bande fait d'une matière élastique souple, dans lequel
la matière est une matière thermoplastique élastique à température ambiante,
le dispositif de couverture de type digue ou le dispositif de fixation en forme de bande comporte une face inférieure (12) à diriger vers la muqueuse buccale ainsi qu'une face supérieure opposée à celle-ci, et au moins une face (12) formée d' une surface structurée (14), la structure de surface (14) présentant une pluralité de cavités (16) qui s'étendent dans la direction de la face opposée à partir d'un plan de surface (18) d'une face (12), et
les cavités (16) présentent chacune, dans le plan de surface (18), une étendue comprise entre 0,10 mm et 0,50 mm, en particulier entre 0,20 mm et 0,40 mm, et une distance comprise entre 0,05 mm et 0,30 mm, en particulier entre 0,10 mm et 0,25 mm.

2. Dispositif de couverture de type digue ou dispositif de fixation en forme de bande selon la revendication 1, dans lequel
la matière thermoplastique élastique présente une courbe effort-déformation presque linéaire dans le cas d'une dilatation dans un plan de feuille.

3. Dispositif de couverture de type digue ou dispositif de fixation en forme de bande selon la revendication 1 ou 2,
celui-ci étant conçu avec une surface absorbante, en particulier sous forme d'un flocage de fibres ou d'un non-tissé appliqué.

4. Dispositif de couverture de type digue ou dispositif de fixation en forme de bande selon la revendication 1, 2 ou 3, dans lequel
les cavités (16) présentent chacune, à partir du plan de surface (18), une profondeur comprise entre 0,05 mm et 0,30 mm, en particulier entre 0,10 mm et 0,20 mm.

5. Dispositif de couverture de type digue ou dispositif de fixation en forme de bande selon les revendications 1 à 4, dans lequel
les cavités (16) sont conçues en forme de points.

6. Dispositif de couverture de type digue ou dispositif de fixation en forme de bande selon la revendication 5, dans lequel
les cavités (16) présentent chacune, dans le plan de surface (18), une section transversale rectangulaire, en particulier carrée.

7. Dispositif de couverture de type digue ou dispositif de fixation en forme de bande selon les revendications 1 à 6, dans lequel
les cavités (16) sont conçues en forme de cuvette, en particulier avec des coins arrondis (24).

8. Dispositif de couverture de type digue ou dispositif de fixation en forme de bande selon les revendications 1 à 7, dans lequel
Il y a au moins deux couches faites de matières différentes et, en particulier, une couche faite en silicone/SEBS/Téflon.

9. Digue avec un dispositif de couverture de type digue selon l'une quelconque des revendications 1 à 8.
